# EUROPEAN PATENT APPLICATION

(11) **EP 1 858 202 A2**
(43) Date of publication of application: **21.11.2007**
(21) Application number: 07107406.6
(22) Date of filing: 03.05.2007
(51) Int. Cl.: H04L 12/28, H04Q 7/32, H04Q 7/38

(54) **Terminal apparatus**

(30) Priority: 15.05.2006 JP 2006135729
(71) Applicant: Kabushiki Kaisha Toshiba, Minato-ku, Tokyo 105-8001 (JP)
(72) Inventor: Shibata, Tsutomu, Toshiba Corporation, Tokyo 105-8001 (JP)
(74) Representative: Henkel, Feiler & Hänzel

(57) **Abstract**

According to one embodiment, a terminal apparatus includes a plurality of communication modules (11, 12, 13) which are communicatively connected corresponding to a plurality of providers (a, b) and a plurality of exchange servers (SV) differing from one another on the packet communication network (INW, 2), and a controller (14) which selects one communication module or the plurality of communication module candidates among the plurality of communication modules (11, 12, 13) based on predetermined conditions in issuing a request for a connection to the packet communication network (INW, 2).

## Description

One embodiment of the present invention relates to a terminal apparatus of a telephone system, which performs voice communications among telephone terminals via an Internet protocol (IP) network, such as a voice over Internet protocol (VoIP) telephone system.

In recent years, a network telephone system (VoIP telephone system) which interactively transmits and receives images and voices as packet data in real time via a packet network has begun to prevail.

The VoIP telephone system allows voice communications among IP telephone terminals, and among IP telephone terminals and a general telephone network by connecting the IP telephone terminals to the IP network including, for instance, a local area network (LAN) and the Internet and also by performing protocol conversions, format conversions of data, etc., at a provider or an exchange server of an enterprise on the IP network.

The VoIP telephone system enables making voice communications at the lowest call charge among providers in selective use of a communication line based on a partner's telephone number in making a call by connecting a switching adapter to switch a plurality of communication lines differing in provider from one another to the IP telephone terminals (for example, Jpn. Pat. Appln. KOKAI Publication No. 2005-151512).

Meanwhile, the VoIP telephone system always automatically selects the communication line of the provider which provides an inexpensive call charge by an exclusive switching adopter, based on the partner's telephone number. Therefore, the VoIP telephone system may provide a service at a low call charge; on the other hand, it cannot switch the communication line in response to a variety of conditions, such as a failure occurrence and a communication quality.

An object of the present invention is to provide a terminal apparatus which can select an optimum provider or an exchange server in response to a variety of conditions caused by the selection request from a user and the occurrence of a failure.

According to an aspect of the present invention, there is provided a terminal apparatus capable of being connected to a packet communication network to transfer a communication packet, comprising: a plurality of communication modules which are communicatively connected corresponding to a plurality of providers and a plurality of exchange servers differing from one another on the packet communication network; and a controller which selects one communication module or a plurality of communication module candidates among the plurality of communication modules based on predetermined conditions in issuing a request for a connection to the packet communication network.

The invention can be more fully understood from the following detailed description when taken in conjunction with the accompanying drawings, in which:
FIG. 1 is an exemplary schematic configuration view depicting a first embodiment of a VoIP telephone system to which a terminal device regarding the invention applied;
FIG. 2 is an exemplary flowchart depicting a control processing procedure of a main control unit of a VoIP terminal in registration of a provider in the first embodiment of the invention;
FIG. 3 is an exemplary flowchart depicting a control processing procedure of the main control unit at the time of calling in the first embodiment; and
FIG. 4 is an exemplary flowchart depicting a control processing procedure of the main control unit of the VoIP terminal at the time of call arrival in a second embodiment of the invention.

Various embodiments according to the invention will be described hereinafter with reference to the accompanying drawings. In general, according to one embodiment of the invention, a terminal apparatus capable of being connected to a packet communication network to transfer a communication packet, comprising: a plurality of communication modules which are communicatively connected corresponding to a plurality of providers and a plurality of exchange servers differing from one another on the packet communication network; and a controller which selects one communication module or the plurality of communication module candidates among the plurality of communication modules based on predetermined conditions in issuing a request for a connection to the packet communication network.

### (First Embodiment)

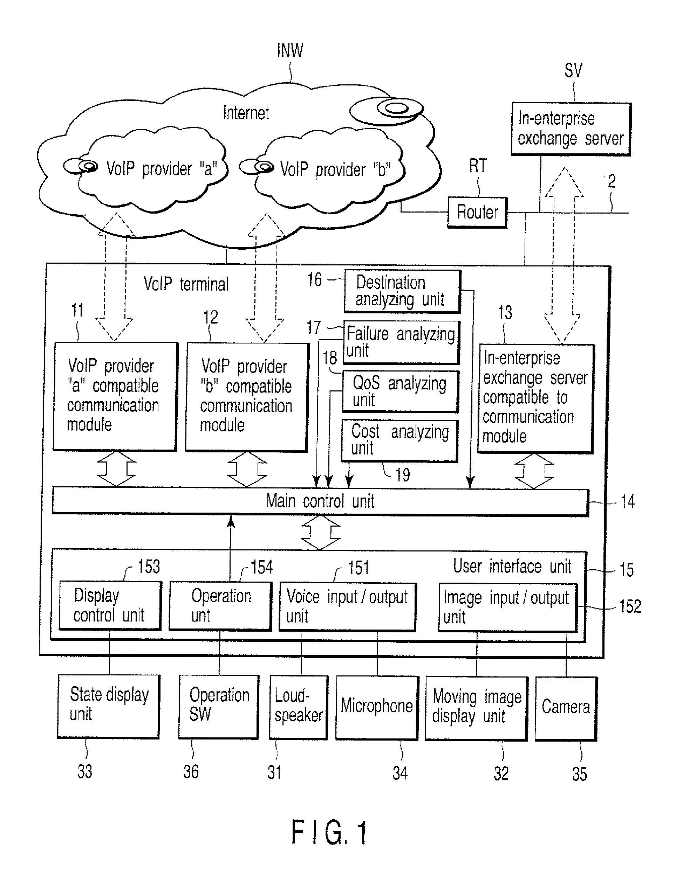

FIG. 1 illustrates a schematic configuration view showing a first embodiment of a VoIP telephone system to which a terminal device regarding the present invention is applied, and the symbol 1 indicates a VoIP terminal.

The VoIP terminal is connected to the Internet INW via a plurality of VoIP providers "a" or a plurality of VoIP providers "b". For the sake of simplicity, FIG. 1 depicts only two VoIP providers "a" and "b".

The VoIP terminal 1 is connected to an in-enterprise exchange server SV (hereinafter, referred to as exchange server SV) via a LAN 2. The exchange server SV is connected to the Internet INW via a router RT. For the simplicity in description, FIG. 1 shows only a single exchange server.

The VoIP provider "a", or the VoIP provider "b" has a function to exchange-connect between the VoIP terminal 1 and a terminal (not shown) on the Internet INW in response to calling and call arrival. The exchange server SV has a function to exchange-connect between the VoIP terminal 1 and a terminal (not shown) on the LAN 2 or a terminal on the Internet INW via a router RT in response to call origination and termination.

The VoIP terminal 1 includes a VoIP provider "a" compatible communication module 11 (hereinafter, referred to as communication module 11), a VoIP provider "b" compatible communication module 12 (hereinafter, referred to communication module 12), an in-enterprise exchange server communication module 13 to connect to the exchange server SV (hereinafter, referred to as communication module 13), a main control unit 14, and a user interface unit 15. For purpose of simplification, FIG. 1 illustrates only the communication module 11, the communication module 12, and the communication module 13 to connect to the exchange server SV. The user interface module 15 is provide with a voice input/output unit 151, an image input/output unit 152, a display control unit 153, and an operation unit 154.

The communication module 11, the communication module 12, or the communication module 13 receives the transmission packet transmitted from the VoIP provider "a", or the VoIP provider "b", and the exchange server SV. The main control unit 14 discriminates whether or not the reception packet is control information or multimedia information, and if is the multimedia information, the main control unit 14 separates it into voice data and image data. The voice data is supplied to the voice input/output unit 151 of the user interface unit 15 to be voice-decoded, then, the reproduced voice signal is loudly output from a loudspeaker 31. In contrast, the image data is supplied to the image input/output unit 152 of the user interface unit 15 to be image-decoded, then, the reproduced image signal is supplied to a moving image display unit 32 and displayed thereon.

A RAM (not shown) in the main control unit 14 stores the control information if necessary. A variety of kinds of information showing an operation state of its own terminal output from the main control unit 14 is supplied to a state display unit 33 through the display control unit 153 of the user interface unit 15 and displayed thereon.

On the other hand, the transmission voice signal of the user output from a microphone 34 is input to the voice input/output unit 151 of the user interface unit 15, and after it is voice-coded, it is input to the main control unit 14. The image signal output from a camera 35 is input to the image input/output unit 152 then input to the main control unit 14 after image coding processing is applied thereto.

The main control unit 14 multiplexes the coded voice data and image data through a prescribed format, and transmits the multiplexed transmission data to the VoIP provider "a", the VoIP provider "b", or the exchange server SV after the transmission data is packetized by the communication module 12 or the communication module 13.

The operation unit 154 of the user interface unit 15 connects an operation switch 36 to the main control unit 14 to accept a variety of instruction inputs to the main control unit 14 from the user.

By the way, a destination analyzing unit 16, a failure analyzing unit 17, a Quality of Service (QoS) analyzing unit 18, and a cost analyzing unit 19 are connected to the main control unit 14.

The destination analyzing unit 16 analyzes a destination at the time of calling under the control by the main control unit 14 to select the communication module on a path capable of being connected to the subscriber of the destination.

The failure analyzing unit 17 manages the failure state of the path for each path of the communication modules under the control by the main control unit 14 to select the communication module on a path which has not been brought into the failure state. As for a method of monitoring the failure, the method which periodically transmits a monitoring signal to the VoIP provider "a", the VoIP provider "b", or the exchange server SV, and monitors whether or not the response signal which is retuned from the VoIP provider "a", the VOIP provider "b", or the exchange server SV in response to the monitoring signal.

The QoS analyzing unit 18 manages QoS information of its path for each communication module, namely communication quality information under the control by the main control unit 14 to select the path of the QoS exceeding a certain reference value.

The cost analyzing unit 19 manages cost information of its path for each communication module under the control by the main control unit 14 to select the communication modules of the paths of the cost satisfying a certain reference value. In this case, preparing the tables showing communication charges for each provider in advance allows managing the cost information.

A variety of operations of the VoIP terminal 1 configured as mentioned above will be set forth below.

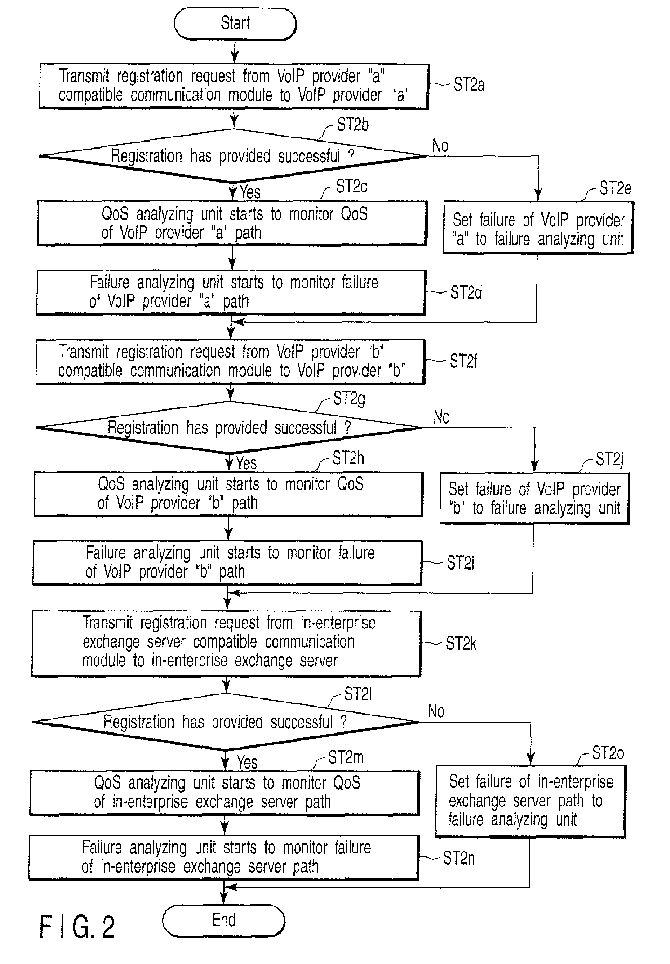

FIG. 2 is a flowchart depicting a control processing procedure of the main control unit 14 in registering to the provider.

When the user firstly conducts a registration operation, the main control unit 14 transmits a registration request to the VoIP provider "a" from the communication module 11 (block ST2a) to determine whether or not the registration has completed successfully (block ST2b).

When the registration of the VoIP terminal 1 to the VoIP provider "a" has completed successfully (YES in block ST2b), the main control unit 14 starts to monitor the QoS of the path of the VoIP provider "a" by means of the QoS analyzing unit 18 (block ST2c).

Subsequently, the main control unit 14 starts to monitor the failure of the path of the VoIP provider "a" by the failure analyzing unit 17 (block ST2d). In the block ST2b, when the registration has been completed unsuccessfully (No, in block ST2b), the main control unit 14 stores the fact of the failure of the path of the VoIP provider "a" into the failure analyzing unit 17 (block ST2e).

Next, the main control unit 14 transmits a registration request from the communication module 12 to the VoIP provider "b" (block ST2f) to determine whether or not the registration has completed successfully (block ST2g).

When the VoIP terminal 1 has registered successfully to the VoIP provider "b" (YES, in block ST2g), the main control unit 14 starts the monitoring of the QoS of the path of the VOIP provider "b" by means of the QoS analyzing unit 18 (block ST2h).

The main control unit 14 then makes the failure analyzing unit 17 start to monitor the failure of the path of the VoIP provider "b" (block ST2i). When it is determined that the VoIP terminal 1 has not registered successfully (No, in block ST2g), the main control unit 14 stores the fact of the failure of the path of the VoIP provider "b" into the failure analyzing unit 17 (block ST2j).

Further, the main control unit 14 transmits a registration request from the communication module 13 to the exchange server SV (block ST2k) to determine whether or not the VoIP terminal 1 has registered successfully (block ST21).

If the registration of the VoIP terminal 1 has been registered in the exchange server SV (Yes, in ST21), the main control unit 14 starts to monitor the QoS of the path of the exchange server SV through the QoS analyzing unit 18 (block ST2m).

Subsequently, the main control unit 14 makes the failure analyzing unit 17 start the monitoring of the failure of the QoS of the path of the exchange server SV (block ST2n). If the registration has been failed (No, in block ST21), the main control unit 14 stores the fact of the failure of the path of the exchange server SV into the failure analyzing unit 17 (block ST2o).

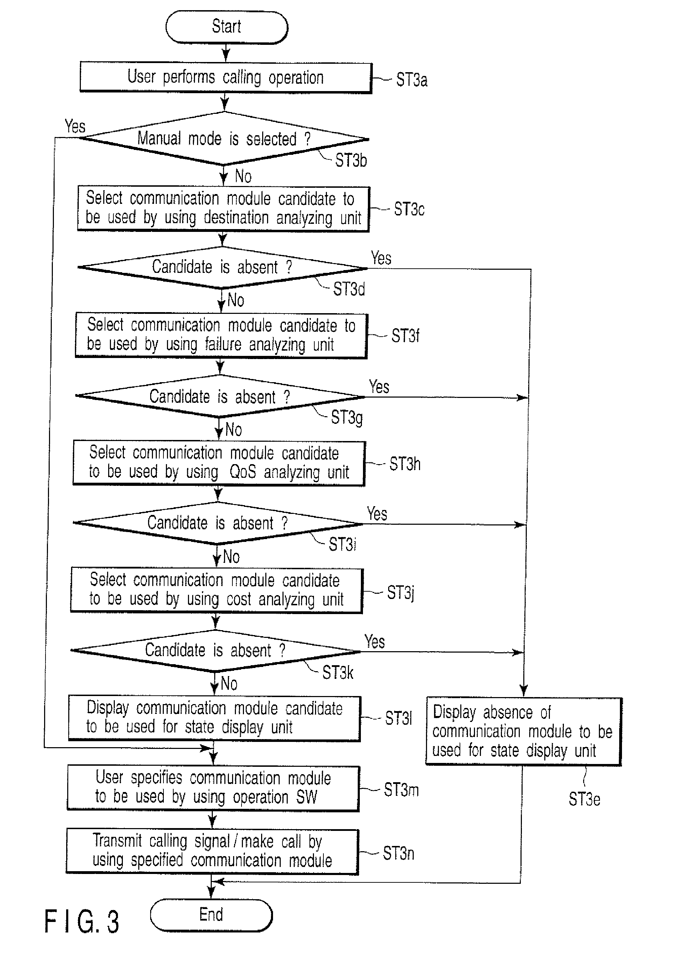

FIG. 3 is a flowchart illustrating a control processing procedure of the main control unit 14 at the time of making a call.

For instance, it is presumed that the user conducts a calling operation from the VoIP terminal 1 (block ST3a). The main control unit 14 of the VoIP terminal 1 then determines whether or not the VoIP terminal 1 has been set in a manual mode (block ST3b).

Here, if it has not been set in the manual mode (No, in block ST3b), the main control unit 14 selects, by the destination analyzing unit 16, a communication module candidate (candidate of path) to be used from the destination of the calling partner who has been input by the user (block ST3c). If the candidate is not present (Yes, in block ST3d), the main control unit 14 shifts from a block ST3d to a block ST3e to supply a message telling the fact of absence of the communication module to a state display unit 33 and displays it thereon.

On the contrary, if the candidate is present (No, in block ST3d), the main control unit 14 shifts from the block ST3d to a block ST3f to make the failure analyzing unit 17 select the communication module candidate (candidate of path) with any failure not occurred therein. If any candidate is not present (Yes, in block ST3g), the main control unit 14 makes a shift from the block ST3g to a block ST3e and supplies a message showing the fact of absence of the communication module possible to be used to the state display unit 33 and displays it thereon.

In the case of presence of the candidate (No, in block ST3g), the main control unit 14 shifts from the block ST3g to a block ST3h to select the communication module candidate (candidate of path) satisfying a cost condition of a certain reference by means of the QoS analyzing unit 18. In the case of absence of the candidate (Yes, in block ST3i), the main control unit 14 shifts from a block ST3i to the block ST3e to supply a message telling the fact of absence of the communication module possible to be used to the state display unit 33 and displays it thereon.

If the candidate is present (No, in block ST3i), the main control unit 14 shifts from a block ST3i to a block ST3j to select a communication module candidate (candidate of path) satisfying cost condition of a certain reference by means of the cost analyzing unit 19. If there is no candidate (Yes, in block ST3k), the main control unit 14 sifts from a block ST3k to the block ST3e to supply a message showing the fact that there is no communication module possible to be used to the state display unit 33 and displays it thereon.

In the case of presence of the candidate (No, in block ST3k), the main control unit 14 shifts from the block ST3k to a block ST31 to supply a message telling the fact that the candidate is the communication module candidate (candidate of path) possible to be used to the state display unit 33 and displays it thereon. Accordingly, the user is able to know the usable communication module from the display in real time.

In such a state, it is supposed that the user inputs a selection instruction from an operation switch 36 in order to specify the communication module (path) to be used from the remaining candidates. The main control unit 14 then makes a shift from a block ST3m to a block ST3n to make the specified communication module 14 transmit a calling signal to a destination on the Internet INW to the VoIP provider "a". When a communication link to and from the destination in response to the calling, it becomes possible to make a call between the VoIP terminal 1 and the destination via the communication link. A multimedia communication is also becomes available.

If the manual mode has been set (Yes, in block ST3b), the main control unit 14 makes a shift from the block ST3b to the block ST3m as it is.

As mentioned above, in the foregoing first embodiment, the VoIP terminals 1 includes the communication modules 11, 12 and 13, shares the already equipped user interface unit 15, determines the VoIP provider "a", the VoIP provider "b", and the exchange server SV which become optimum candidates based on operation information by the user, information indicating the VoIP provider "a" and VoIP provider "b" or information indicating the exchange server SV, a detection result of a failure regarding each communication of the VoIP provider "a", the VoIP provider "b", or the exchange server SV, and an analysis result of the QoS and the cost at the time of calling, and if there is a communication module satisfying the conditions, the VoIP terminal 1 uses this communication module.

Thereby, when selecting the communication modules 11, 12 and 13, the operation information by the user, the information indicating the VoIP provider "a" and VoIP provider "b" or information indicating the exchange server SV, a detection result of a failure regarding each communication of the VoIP provider "a", the VoIP provider "b", or the exchange server SV, and an analysis result of the QoS and the cost are taken into account. Therefore, in comparison to a conventional system in which a provider which proposes inexpensive communication charge is always selected based on the destination's telephone number at the time of calling, the VoIP telephone system in accordance with the first embodiment may select optimum VoIP provider "a", VoIP provider "b" or the in-enterprise exchange server SV in response to a variety of conditions, thereby the VoIP telephone system may enhance the reliability in selecting the communication module.

In the first embodiment, the state display unit 33 displays the selection result of the communication module candidate, and makes a call from the communication module specified by waiting for the instruction from the user. Therefore, the user may determine by itself whether the specified communication modules should be used or not at every time when the communication modules are selected, thereby the VoIP telephone system may use only the communication module which is really required.

Further, according to the first embodiment, the VoIP telephone system selecting many communication modules satisfying the conditions as the candidates, and the user determining by itself whether the communication modules should be used or not to selection-instruct the use, thereby the VoIP telephone system may further enhance the efficiency in deciding the communication modules including the communication modules 11, 12, and 13.

### (Second Embodiment)

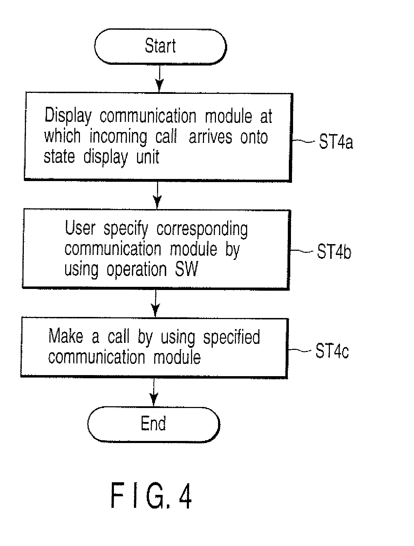

FIG. 4 is a flowchart depicting a control processing procedure of the main control unit 14 at the time of an incoming call as a second embodiment of the present invention.

For example, it is presumed that a terminal on the Internet INW makes a call, and an incoming call arrives to the communication module 12 from the VOIP provider "b" in response to the calling. The main control unit 14 then supplies a message showing the fact that the communication module 12 is the communication module (path) at which the call arrives to the state display unit 33 and displays it thereon (block ST4a). Accordingly, the user may come to know the communication module at which the incoming call has arrived.

In this case, it is assumed that the user specifies and inputs the communication module (path) to make a response by means of the operation switch 36. The main control unit 14 then shifts from the block ST4b to the block ST4c, and makes a connection to the partner's terminal by using the specified communication module 12.

As mentioned above, according to the aforementioned second embodiment, the user may confirm, through the state display unit 33, by which communication module the incoming call has been received in the VoIP telephone system.

### (Other Embodiment)

The present invention is not limited to each of the given embodiment. For example, in the first embodiment, the example, which selects the communication module by the combination of the operation information from the user, the provider to which the communication partner on the Internet INW belongs, the detection result of the failures with respect to each communication of the plurality of providers, the analysis result of the QoS, and the cost, has been described. However, the invention is not limited to the example; the invention may select the communication module in accordance with any combination of the aforementioned conditions. The invention may use a single of the foregoing conditions.

In each embodiment, the invention may be applicable to a personal computer with a VoIP telephone application mounted thereon and to electronic equipment to treat a voice signal.

Other than this, the invention may be embodied in various forms without departing from the spirit or scope of the general inventive concept thereof, for the types and configurations of the terminal devices such as VoIP terminals, the kinds of the selection conditions of the communication modules, the selection control procedure of the communication modules at the times of calling and call arrival, or the like.

## Claims

1. A terminal apparatus capable of being connected to a packet communication network (INW, 2) to transfer a communication packet, **characterized by** comprising:
a plurality of communication modules (11, 12, 13) which are communicatively connected corresponding to a plurality of providers (a, b) and a plurality of exchange servers (SV) differing from one another on the packet communication network (INW, 2); and
a controller (14) which selects one communication module or a plurality of communication module candidates among the plurality of communication modules (11, 12, 13) based on predetermined conditions in issuing a request for a connection to the packet communication network (INW, 2).

2. The terminal apparatus according to claim 1, **characterized in that** the controller (14) uses operation information by a user to determine the conditions.

3. The terminal apparatus according to claim 1, **characterized in that** the controller (14) uses at least one of information showing a provider (a, b) and information showing an exchange server (SV), the provider to which a communication partner on the packet communication network (INW, 2) belongs, the exchange server (SV) to which a communication partner on the packet communication network (INW, 2) belongs.

4. The terminal apparatus according to claim 1, **characterized in that** the controller (14) detects a failure regarding each communication of the plurality of providers (a, b) and the plurality of exchange servers (SV), to select one communication module or the plurality of communication module candidates among the plurality of communication modules (11, 12, 13) based on the detection result.

5. The terminal apparatus according to claim 1, **characterized in that** the controller (14) uses each communication quality of the plurality of providers (a, b) and the plurality of the exchange servers (SV) to determine the conditions.

6. The terminal apparatus according to claim 1, **characterized in that** the controller (14) analyzes a cost needed to make each communication of the plurality of providers (a, b) and the plurality of exchange servers (SV) as for determination of the conditions, to select one communication module or the plurality of communication module candidates among the plurality of communication modules (11, 12, 13) based on the analysis result.

7. The terminal apparatus according to claim 1, **characterized in that** the controller (14) uses two or more combinations of information showing a provider to which a communication partner on the packet communication network (INW, 2) belongs, or information showing an exchange server (SV) to which the communication partner, a detection result of a failure with respect to each communication of the plurality of providers (a, b) and the plurality of exchange servers (SV), each communication quality of the plurality of providers (a, b) and the plurality of exchange servers (SV), an analysis result of a cost needed by each communication of the plurality of providers (a, b) and the plurality of exchange servers (SV), to determine the conditions.

8. The terminal apparatus according to claim 1, **characterized in that** the controller (14) notifies the fact to a user when one communication module or the plurality of communication module candidates among the plurality of communication modules (11, 12, 13) is selected to connect it to a provider (a, b) or an exchange server (SV) corresponding to the case in which the user inputs a connection instruction in response to the notification.

9. The terminal apparatus according to claim 1, **characterized in that** the controller (14) notifies information, showing a communication module to which an incoming call has arrived among the plurality of communication modules (11, 12, 13), to a user.

10. The terminal apparatus according to claim 1, **characterized in that** the controller (14) further comprising:
a candidate selector which selects a plurality of communication module candidates among the plurality of communication modules (11, 12, 13) based on two or more combinations of information showing a provider (a, b) to which a communication partner on the packet communication network (INW, 2) belongs, or information showing an exchange server (SV), a detection result of a failure with respect to each communication of the plurality of providers (11, 12, 13) and the plurality of exchange server (SV), each communication quality of the plurality of providers (a, b) and the plurality of exchange servers (SV), and an analysis result of costs needed to each communication of the plurality of providers (a, b) and the plurality of exchange servers (SV), when a connection request to the packet communication network (INW, 2) is issued; and
a determiner which notifies the fact that the plurality of the communication module candidates have been selected, and selects at least one communication module among the plurality of communication module candidates, when a user inputs a selection instruction to the notification.
